# FASCICULE DE BREVET EUROPEEN

(11) **EP 1 380 201 B1**
(45) Date de publication et mention de la délivrance du brevet: **23.11.2005**
(21) Numéro de dépôt: 03360081.8
(22) Date de dépôt: 01.07.2003
(51) Int. Cl.: A01C 7/20

(54) **Semoir agricole**
Drillmaschine
Seed drill

(30) Priorité: 09.07.2002 FR 0208717
(43) Date de publication de la demande: 14.01.2004
(73) Titulaire: Kuhn-Nodet S.A., 77876 Montereau (FR)
(72) Inventeur: Piasentin, Christian, 77710 Lorrez le Bocage (FR)
(74) Mandataire: Andres, Jean-Claude

(56) Documents cités:
- EP-A- 0 599 793
- EP-A- 0 974 252
- GB-A- 2 043 419
- GB-A- 2 072 474
- US-A- 4 580 508

## Description

La présente invention se rapporte au domaine technique générale du machinisme agricole. Elle concerne plus particulièrement un semoir agricole comportant :
- un châssis ;
- un dispositif de stockage de semence ;
- des éléments d'implantation de la semence dans le sol constitués :
   * de socs de semis disposés suivant au moins deux rangées sensiblement perpendiculaires à la direction d'avance et ;
   * de bras de liaison sensiblement identiques supportant chacun un soc de semis ;
   et
- un dispositif de réglage du terrage centralisé agissant sur l'ensemble des éléments d'implantation et permettant un réglage du terrage simultanément sur lesdites rangées.

Le semoir connu par le prospectus "**Semoirs pneumatiques R-Ti**" de la société Roger comporte, dans les grandes lignes, un châssis, une trémie destinée à contenir de la semence et des éléments d'implantation de la semence dans le sol. Ces éléments d'implantation comportent des socs disposés selon trois rangées et des bras de liaison semblables ayant la même longueur, supportant chacun un soc de semis.

Chaque bras de liaison est lié audit châssis au moyen d'une articulation et d'un dispositif à ressort garantissant une bonne pénétration des socs dans le sol. Le dispositif à ressort permet d'exercer une force en direction dudit sol sur les éléments d'implantation, cette force est appelée pression de terrage. Il est nécessaire de pouvoir modifier la pression de terrage en fonction du terrain à ensemencer et/ou du type de graines à semer. Pour assurer une levée homogène des graines, il est indispensable que la pression de terrage soit identique pour chaque élément d'implantation. Pour atteindre un tel résultat, il est nécessaire de modifier la tension de chaque dispositif à ressort et cela de manière individuelle. Sur un semoir en ligne de ce type, la largeur de travail atteint souvent 3 mètres et plus, le semoir comporte ainsi un nombre important d'éléments d'implantation disposés côte à côte et selon trois rangées perpendiculaires à la direction d'avance. Par conséquent, cette opération de modification du réglage de la pression de terrage est donc particulièrement pénible et coûteuse en temps.

Un semoir selon le préambule de la revendication 1 est également connu par **GB 2 043 419**. Ce semoir connu comporte, entre autres, un dispositif de réglage du terrage centralisé agissant sur l'ensemble des éléments d'implantation et permet un réglage du terrage simultanément sur les rangées.

Le but de la présente invention vise donc à remédier aux inconvénients de l'état de la technique en assurant un réglage rapide et facile de la pression de terrage, tout en assurant un bon fonctionnement du semoir et à moindre coût.

La revendication 1 décrit un semoir selon la présente invention. Ce semoir se caractérise par le fait que ledit dispositif de réglage du terrage centralisé est constitué d'un arbre pivot qui s'étend sur toute la largeur du semoir, entre une poutre avant et une poutre arrière, lesdites poutres supportant des supports sur lesquels sont liés lesdits bras de liaison au moyen d'une articulation respective. La pression de terrage est ainsi aisément et rapidement augmentée ou diminuée pour tous les éléments d'implantation du semoir au moyen du dispositif de réglage du terrage centralisé.

D'autres caractéristiques et avantages de l'invention ressortiront de la description ci-après avec référence aux dessins annexés qui représentent, à titre d'exemple non limitatif, une forme de réalisation du semoir selon l'invention. Sur ces dessins :
- la **figure 1** représente une vue de l'arrière d'un semoir agricole conforme à l'invention en position de travail ;
- la **figure 2** représente une vue éclatée de l'arrière du semoir de la figure 1 ;
- la **figure 3** représente, à une autre échelle, le semoir de la figure 1 selon une vue de côté ;
- la **figure 4** représente, à une autre échelle, une autre partie du semoir de la figure 1 selon une vue de côté.

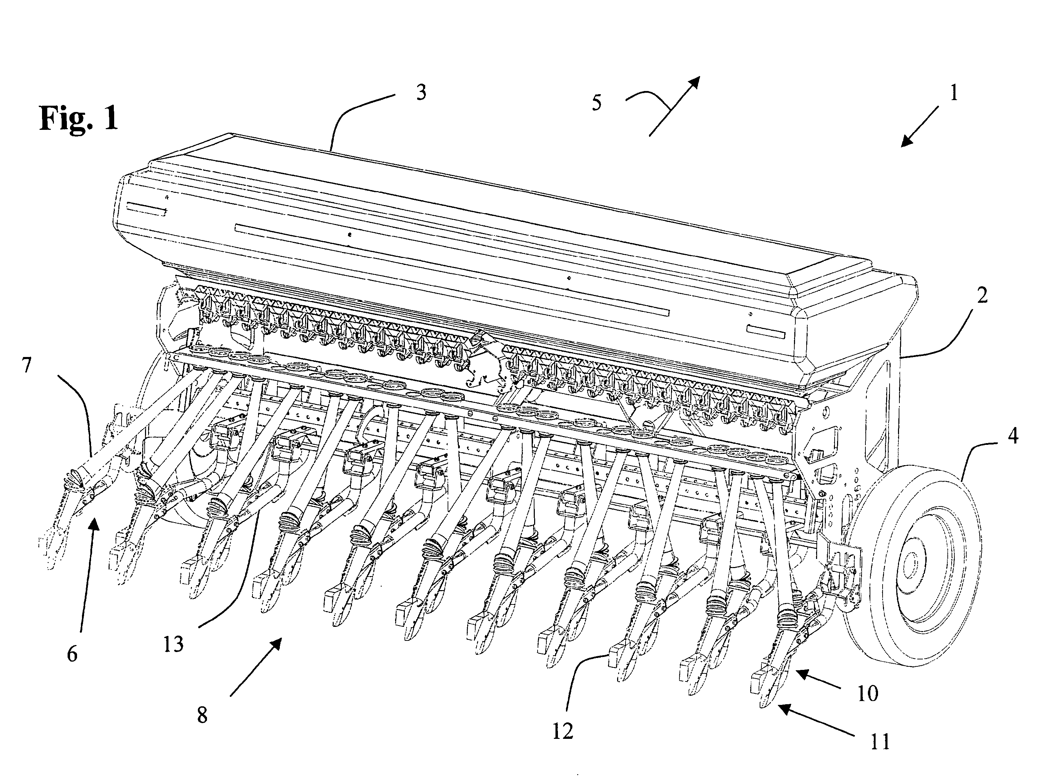

La figure 1 est un exemple de réalisation d'un semoir agricole (1) selon l'invention. Ce semoir (1) comporte, dans les grandes lignes, un châssis (2) sur lequel est placé un dispositif de stockage de semence (3). Pour le travail, ledit semoir (1) s'appuie sur le sol (S) au moyen de roues (4) et est lié à un tracteur (non représenté) ou à une machine de travail du sol (non représentée) par l'intermédiaire d'un dispositif d'attelage adéquat, connu de l'homme du métier. Le semoir (1) est ainsi déplacé suivant une direction et un sens d'avance indiqué par la flèche (5) dans le champ à ensemencer. Dans la suite de la description, les notions "avant" et "arrière", "devant" et "derrière" sont définies par rapport au sens d'avance (5) et les notions "droite" et "gauche" sont définies en regardant ledit semoir (1) de l'arrière dans ledit sens d'avance (5).

Les graines contenues dans le dispositif de stockage (3) sont introduites dans le sol (S) par l'intermédiaire d'au moins un élément d'implantation (6). Chaque élément d'implantation (6) est relié à un dispositif de dosage de la semence (non représenté), situé sous le dispositif de stockage de semence (3), permettant de régler précisément la quantité de semence déposée en terre. La semence est acheminée dudit dispositif de dosage vers les éléments d'implantation (6) au moyen d'un tube d'alimentation respectif (7). Un tel dispositif de dosage de semence est connu de l'homme du métier et ne sera donc pas décrit plus en détail. Le semoir (1) selon l'invention est un semoir du type mécanique ainsi les graines tombent dans la terre par gravité.

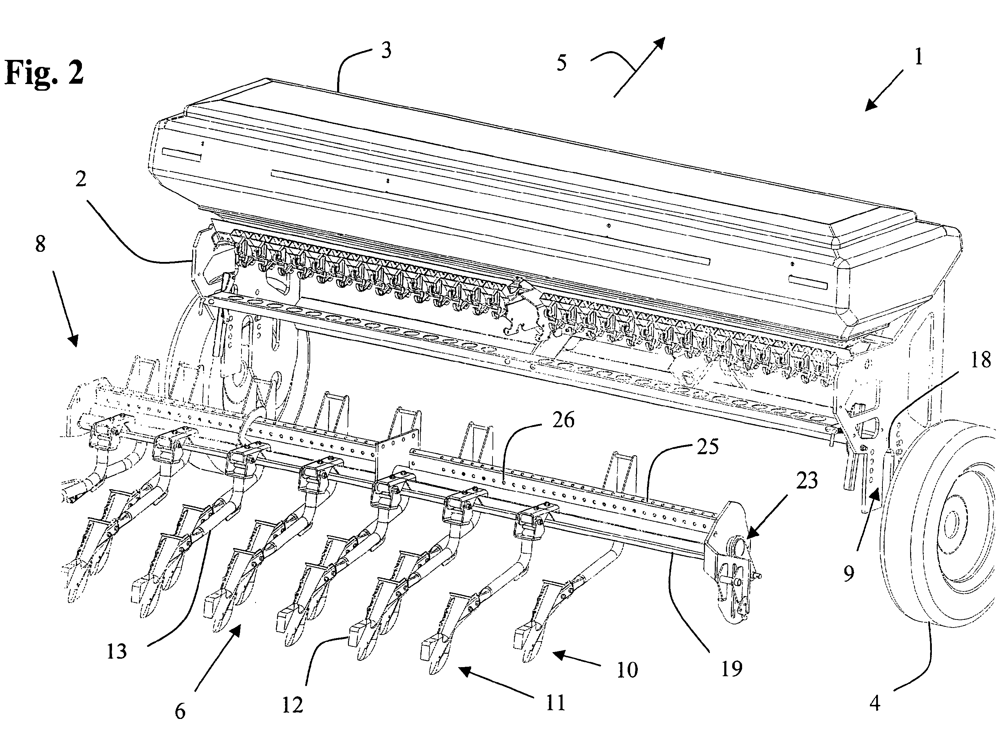

Selon la figure 2, ledit châssis (2) supporte une barre de semis (8) sur laquelle sont fixés les différents éléments d'implantation (6). Cette barre de semis (8) est liée audit châssis (2) via un dispositif à glissière(s) (9). Celui-ci permet un débattement vertical de la barre de semis (8) et donc de tous les éléments d'implantation (6) par rapport audit châssis (2). Avec ce dispositif à glissière(s) (9), la profondeur de pénétration des éléments d'implantation dans le sol (6) est sensiblement constante sur toute la largeur du semoir (1), et par conséquent les graines sont déposées à une profondeur idéale pour la germination et la croissance qui sont celles d'un rendement optimal lors de la récolte.

Lesdits éléments d'implantation de graines dans le sol (6), selon l'exemple de réalisation représenté, sont disposés sensiblement à l'arrière et sensiblement en dessous dudit dispositif de stockage (3). Lesdits éléments d'implantation (6) sont disposés, de préférence, selon deux rangées (10, 11) sensiblement perpendiculaires à la direction d'avance (5). Lesdits éléments d'implantation (6) sont espacés de telle sorte qu'il y a des intervalles assez réguliers entre les lignes dans lesquelles sont déposées les graines.

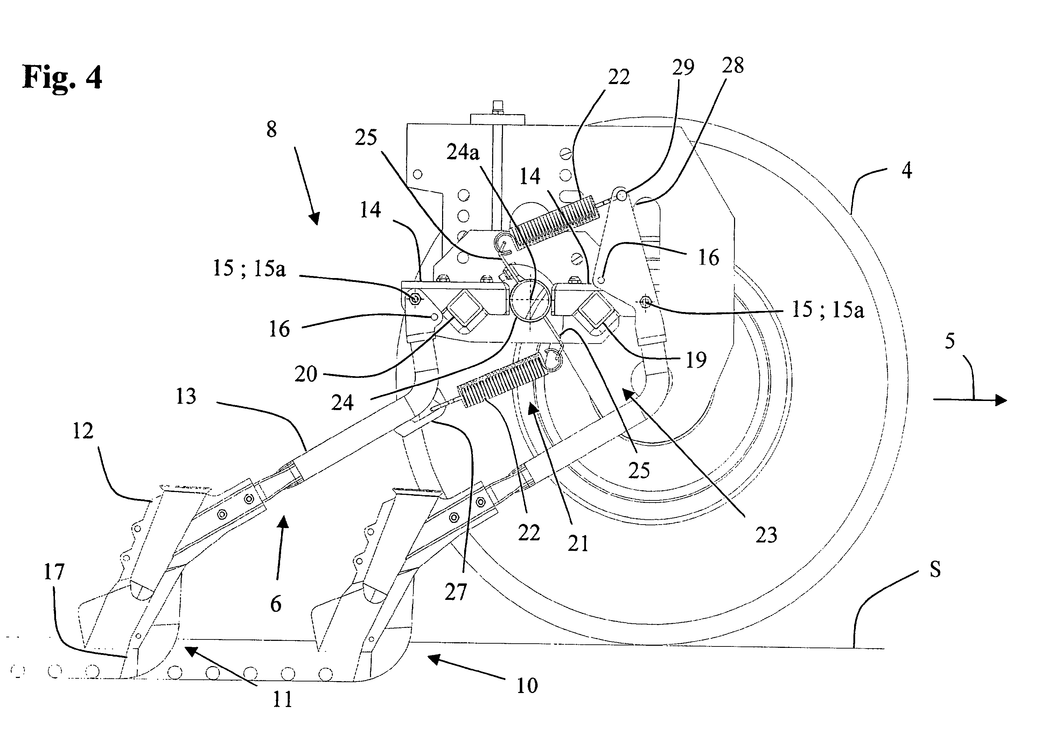

A la lumière des différentes figures, les éléments d'implantation (6) sont sensiblement identiques et chacun porte un soc de semis (12) qui est fixé à l'extrémité d'un bras de liaison respectif (13). Chaque rangée (10, 11) comporte donc plusieurs socs de semis (12) situés l'un à coté de l'autre de manière à former une rangée. La rangée avant (10) est située devant la rangée arrière (11) compte tenu de la direction d'avance (5). Comme représenté dans la figure 4, l'autre extrémité de chaque bras de liaison (13) est liée à des supports (14) appartenant à ladite barre de semis (8) au moyen d'une articulation (15) respective d'axe longitudinal (15a) au moins sensiblement horizontal et perpendiculaire à la direction d'avance (5).

Selon l'exemple de réalisation représenté sur la figure 1, ledit bras de liaison (13) est avantageusement tubulaire et de section transversale circulaire. Il s'étend, à partir de l'articulation (15), vers l'arrière du semoir (1) dans le sens opposé à la direction d'avance (5), sensiblement parallèlement à cette dernière, et sensiblement horizontalement. Ladite articulation (15) permet audit bras de liaison (13) un débattement vers le haut et vers le bas. Une telle articulation (15) permet donc avantageusement à l'élément d'implantation (6) de suivre les dénivellations du sol (S) ce qui permet d'implanter les graines dans le sol (S) à une profondeur sensiblement constante.

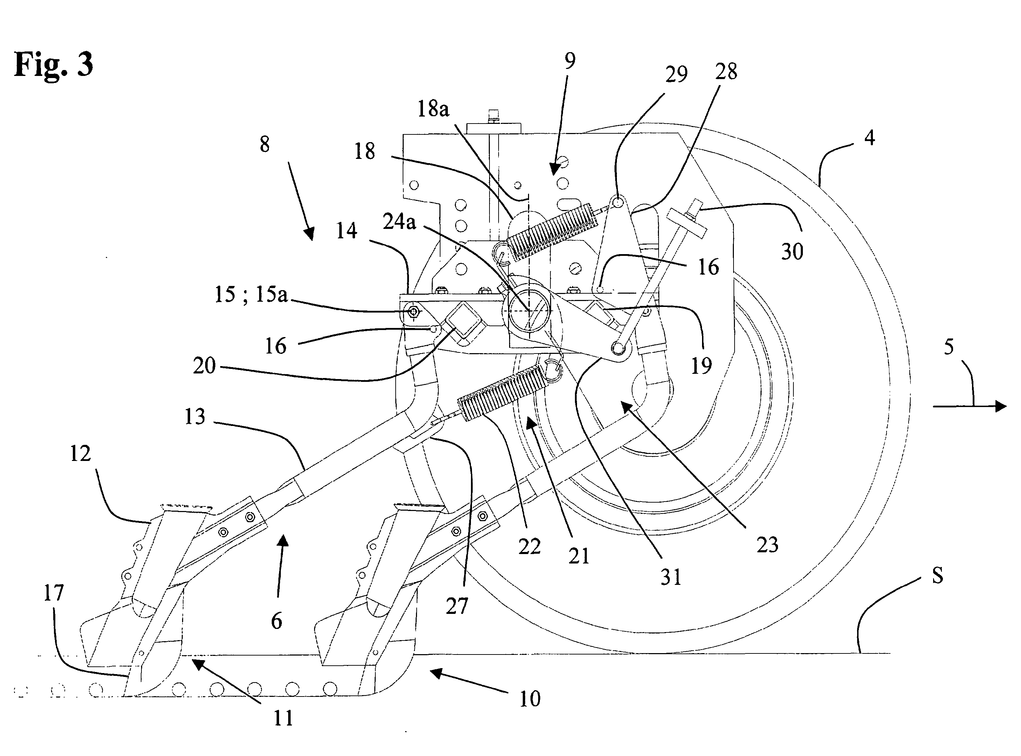

Pour éviter que les socs de semis (12) ne pénètrent trop profondément dans le sol (S) et déposent alors la semence trop profondément, il est prévu une butée (16) limitant le déplacement du bras de liaison (13) vers le bas. Au travail, la butée (16) de chaque bras de liaison (13) est en contact avec son support correspondant (14). La position de cette butée (16) permet de régler l'orientation de l'orifice de sortie (17) des graines dudit soc de semis (12). Pour assurer un semis régulier et une profondeur de semis constante, l'orifice de sortie (17) par lequel lesdites graines sont implantées dans le sol (S) doit être sensiblement parallèle au fond du sillon creusé par le soc de semis (12) pour que les graines tombent aisément dans la terre. L'orifice de sortie (17) assure aussi le positionnement de la graine dans le sol (S). Comme représenté sur la figure 3, la butée (16) d'un élément d'implantation (6) de la rangée avant (10) se trouve au-dessus dudit support (14) alors que la butée (16) d'un élément d'implantation (6) de la rangée arrière (11) est située en dessous dudit support (14).

Le réglage de la profondeur de semis est effectué de manière centralisé au moyen dudit dispositif à glissière(s) (9) adapté sur le châssis (2). A cet effet, le châssis (2) comporte de part et d'autre un trou oblong (18) d'axe sensiblement vertical dans lequel vient coulisser ladite barre de semis (8). Cette dernière peut être fixée selon différentes hauteurs par rapport au sol (S). Ledit trou oblong (18) comporte avantageusement son ouverture vers le bas en direction du sol (S).

Selon les figures 3 et 4, ladite barre de semis (8) comporte encore deux poutres (19, 20) sensiblement perpendiculaires à la direction d'avance (5) qui soutiennent les éléments d'implantation (6). Lesdites deux poutres (19, 20) s'étendent sur toute la largeur du semoir (1). Lesdites poutres (19, 20) soutiennent plus particulièrement les supports (14) desdits bras de liaison (13). Ces supports (14) sont disposés parallèlement à la direction d'avance (5) et régulièrement sur toute la largeur desdites poutres (19, 20). On notera encore que la poutre avant (19) supporte les éléments d'implantation (6) de la rangée avant (10) et que la poutre arrière (20) supporte les éléments d'implantation (6) de la rangée arrière (11). La poutre avant (19) est de ce fait située devant la poutre arrière (20). Ladite poutre avant (19) est située sensiblement dans un même plan horizontal que ladite poutre arrière (20). Lesdits supports (14) des éléments d'implantation (6) sont avantageusement maintenus par une desdites poutres (19, 20).

Pour assurer une pénétration des socs de semis (12) dans le sol (S), il est prévu un dispositif de terrage (21) permettant d'exercer une force vers le bas sur les éléments d'implantation (6) en direction du sol (S). A cet effet, le dispositif de terrage (21) comporte des éléments élastiques (22) exerçant une force sur un bras de liaison correspondant (13) en direction du sol (S). L'intensité de la force développée par les éléments élastiques (22) peut, selon une caractéristique importante de l'invention, être réglée au moyen d'un dispositif de réglage du terrage centralisé (23). Lors du travail, tous les bras de liaison (13) sont maintenus en contact avec ledit support respectif (14) par l'action de l'élément élastique respectif (22).

Le semoir (1) de l'invention est doté d'un tel dispositif de réglage du terrage centralisé (23). Ce dernier est disposé, selon une vue de dessus, entre la poutre avant (19) et la poutre arrière (20) de ladite barre de semis (8). Le dispositif de réglage du terrage centralisé (23) est ainsi disposé à mi-distance entre ladite poutre avant (19) et ladite poutre arrière (20). Ledit dispositif de réglage du terrage centralisé (23) est constitué d'un arbre pivot (24). L'arbre pivot (24) s'étend sur toute la largeur du semoir (1). L'arbre pivot (24) est disposé, selon une vue de côté, à mi-distance entre la poutre avant (19) et la poutre arrière (20). L'arbre pivot (24) comporte un axe longitudinal (24a) au moins sensiblement horizontal et perpendiculaire à la direction d'avance (5). Cet arbre pivot (24) tourne librement autour dudit axe longitudinal (24a) par rapport audit châssis (2). L'arbre pivot (24) est, d'une manière avantageuse, disposé à mi-distance entre l'articulation (15) maintenant les éléments d'implantation (6) sur la poutre avant (19) et l'articulation (15) maintenant les éléments d'implantation (6) sur la poutre arrière (20). L'axe longitudinal (24a) de l'arbre pivot (24) est sensiblement parallèle à l'axe longitudinal (15a) des articulations (15).

Chaque élément d'implantation (6) est relié audit arbre pivot (24) au moyen dudit élément élastique (22). Une autre caractéristique de l'invention est de pouvoir combiner le réglage du terrage d'un élément d'implantation (6) de la rangée avant (10) avec un élément d'implantation (6) de la rangée arrière (11). A cet effet, ledit arbre pivot (24) comporte au moins une tôle (25). D'une manière préférentielle, l'arbre pivot (24) comporte deux tôles (25) placées de telle manière à être diamétralement opposées. Lesdites tôles (25) s'étendent sur toute la largeur du semoir (1) et portent lesdits éléments élastiques (22) de chaque bras de liaison (13). Lesdites tôles (25) comportent chacune une pluralité de trous (26) pour la fixation d'un élément élastique (22).

Dans le mode de réalisation de la figure 2, chaque élément élastique (22) est lié d'une part, à son bras de liaison correspondant (13) et d'autre part à l'arbre pivot (24). L'élément élastique (22) du bras de liaison avant est lié à la tôle (25) située quelque peu au-dessus dudit support (14) et l'élément élastique (22) du bras de liaison arrière est lié à la tôle (25) située quelque peu en dessous dudit support (14). Ainsi, le bras de liaison (13) de l'élément d'implantation (6) de la rangée avant (10) est avantageusement relié au bras de liaison (13) de l'élément d'implantation (6) de la rangée arrière (11) par l'intermédiaire de l'arbre pivot (24). Lesdits bras de liaison (13) étant sensiblement identiques par leurs formes et leurs points d'articulation (15) et les éléments élastiques (22) étant similaires, la cinématique de liaison à l'arbre pivot (24) est comparable ce qui permet d'avoir une pression de terrage identique sur la rangée de semis avant (10) et sur la rangée de semis arrière (11).

Dans la figure 4, ledit bras de liaison arrière comporte un moyen d'accrochage (27) pour l'élément élastique (22) situé en dessous dudit support (14). Afin de respecter cette cinématique de liaison comparable et pour simplifier la mise en oeuvre, il est avantageux de pourvoir ledit bras de liaison avant d'une partie rallongée (28). Cette partie rallongée (28) prend son origine au niveau de l'articulation (15) à partir de laquelle, elle s'étend vers le haut en s'éloignant du sol (S). La partie rallongée (28) est également munie d'un moyen d'accrochage (29) pour un élément élastique (22). Ce moyen d'accrochage (29) est disposé au moins sensiblement à la même distance de l'articulation (15) du bras de liaison arrière. Cette disposition des éléments élastiques (22) implique un même bras de levier et par conséquent la force exercée sur lesdits bras de liaison (13) toujours égale à la même valeur sur les différentes rangées (10, 11).

Afin de maintenir lesdits socs de semis (12) dans le sol (S), la pression de terrage doit être supérieure à l'effort du sol (S) exercé sur le soc de semis (12). La pression de terrage est donc amenée à être modifiée en fonction de l'état du sol (S) à ensemencer. Grâce audit dispositif de réglage du terrage centralisé (23), le réglage de la pression de terrage s'opère donc de façon centralisée pour l'ensemble des éléments d'implantation (6). La rotation de l'arbre pivot (24) est gérée par un levier de réglage de la pression de terrage (30) associé à un flasque (31). Le levier de réglage de la pression de terrage (30) est accompagné d'une règle graduée pour repérer le degré de pression de terrage. Lorsque cet arbre pivot (24) effectue une rotation dans le sens horaire, la tension de chaque élément élastique (22) augmente et ainsi la pression de terrage sur lesdits bras de liaison (13) est plus élevée. Au contraire lors d'une rotation de l'arbre pivot (24) dans le sens anti-horaire, la tension de chaque élément élastique (22) diminue et ainsi la pression de terrage est plus faible. La manipulation de l'arbre pivot (24) au moyen dudit levier de réglage de la pression de terrage (30) peut être réalisée via un système mécanique, électrique ou hydraulique. L'élément élastique (22) est avantageusement constitué d'un ressort.

Un avantage appréciable de l'invention est lors du réglage de la profondeur d'implantation des socs de semis (12) au moyen dudit dispositif à glissière(s) (9) le réglage de la pression de terrage n'est pas modifié et inversement. Les deux réglages sont indépendants. Par conséquent, il est aisé pour l'utilisateur d'adapter chaque réglage selon le type de graines à semer et selon l'état du champ à ensemencer.

Un autre avantage de l'invention se traduit par la possibilité de changer l'écartement entre les éléments d'implantation (6). Il est aisé de déplacer les bras de liaison (13) avec leurs supports (14) sur lesdites poutres (19, 20). La tôle (25) est également dotée de plusieurs trous (26) qui permettent l'adaptation du ressort (22) à un écartement différent entre les éléments d'implantation (6).

Ledit système de glissière(s) (9) réalisant le réglage de la profondeur de semis permet, d'une manière avantageuse, un démontage rapide de ladite barre de semis (8) lors d'une quelconque intervention sur la barre de semis (8). Le démontage rapide est réalisable car ledit trou oblong (18) ménagé dans ledit châssis (2) est débouchant.

Il est bien évident que l'invention n'est pas limitée à l'exemple de réalisation et d'utilisation décrit ci-dessus. Différentes modifications restent possibles, notamment en ce qui concerne la constitution des divers éléments ou par substitution d'équivalents techniques.

C'est ainsi qu'il est parfaitement possible de remplacer les socs de semis (12) aux extrémités des bras de liaison (13) des éléments d'implantation (6) par des socs à disques, lors de l'utilisation dans un terrain chargé en débris végétaux.

Il est aussi concevable que l'arbre pivot (24) comporte une petite tôle individuelle pour le maintien de chaque élément élastique (22) sur l'arbre pivot (24).
Le semoir agricole (1) décrit dans l'invention est un semoir mécanique, il est tout à fait imaginable que le semoir puisse être du type pneumatique. Le bras de liaison (13) pourra également faire office de tube d'alimentation des graines.

## Revendications

1. Semoir agricole (1) comportant :
- un châssis (2) ;
- un dispositif de stockage de semence (3) ;
- des éléments d'implantation (6) de la semence dans le sol (S) constitués :
* de socs de semis (12) disposés suivant au moins deux rangées (10, 11) sensiblement perpendiculaire à la direction d'avance (5) et ;
* de bras de liaison (13) sensiblement identiques supportant chacun un soc de semis (12) ;
et
- un dispositif de réglage du terrage centralisé (23) agissant sur l'ensemble des éléments d'implantation (6) et permettant un réglage du terrage simultanément sur lesdites rangées (10, 11) ;
***caractérisé par le fait* que** ledit dispositif de réglage du terrage centralisé (23) est constitué d'un arbre pivot (24) qui s'étend sur toute la largeur du semoir (1), entre une poutre avant (19) et une poutre arrière (20), lesdites poutres (19, 20) supportant des supports (14) sur lesquels sont liés lesdits bras de liaison (13) au moyen d'une articulation respective (15).

2. Semoir selon la revendication 1, ***caractérisé par le fait* que** ledit arbre pivot (24) est disposé à mi-distance entre l'articulation (15) des éléments d'implantation (6) de la poutre avant (19) et l'articulation (15) des éléments d'implantation (6) de la poutre arrière (20).

3. Semoir selon la revendication 1 ou 2, ***caractérisé par le fait* que** le réglage du terrage est simultané entre lesdits éléments d'implantation (6) de la rangée avant (10) et lesdits éléments d'implantation (6) de la rangée arrière (11).

4. Semoir selon la revendication 3, ***caractérisé par le fait* que** ledit dispositif de réglage du terrage centralisé (23) comporte au moins un levier de réglage de la pression de terrage (30) permettant de modifier la pression de terrage de tous les socs de semis (12) simultanément à une même valeur.

5. Semoir selon la revendication 1 ou 2, ***caractérisé par le fait* que** chaque bras de liaison (13) est lié à une tôle (25) dudit arbre pivot (24) au moyen d'un élément élastique (22).

6. Semoir selon la revendication 5, ***caractérisé par le fait* que** ledit arbre pivot (24) comporte deux tôles (25) diamétralement opposées.

7. Semoir selon la revendication 5 ou 6, ***caractérisé par le fait* que** chaque tôle (25) comporte plusieurs trous (26) pour la fixation desdits éléments élastiques (22).

8. Semoir selon l'une quelconque des revendications 1 à 7, ***caractérisé par le fait* qu'**au moins un desdits bras de liaison (13) comporte une partie rallongée (28).

9. Semoir selon la revendication 5 ou 7, ***caractérisé par le fait* que** ledit élément élastique (22) est constitué d'un ressort.

10. Semoir selon l'une quelconque des revendications 1 à 9, ***caractérisé par le fait* que** lesdits éléments d'implantation (6) de la rangée avant (10) et lesdits éléments d'implantation (6) de la rangée arrière (11) sont liés audit châssis (2) au moyen d'un dispositif à glissière(s) (9) permettant un démontage rapide d'une barre de semis (8), ladite barre de semis (8) supportant lesdits éléments d'implantation (6).

11. Semoir selon la revendication 10, ***caractérisé par le fait* que** ledit dispositif à glissière(s) (9) comporte un trou oblong (18).

12. Semoir selon la revendication 11, ***caractérisé par le fait* que** ledit trou oblong (18) est ouvert vers le bas en direction du sol (S).

13. Semoir selon l'une quelconque des revendications 1 à 12, ***caractérisé par le fait* que** ledit semoir agricole (1) est du type semoir en ligne.

## Patentansprüche

1. Sämaschine (1), die
- einen Rahmen (2);
- einen Trichter (3) zur Lagerung von Saatgut;
- Elemente (6) zur Ablage des Saatguts in den Boden (S) mit
• Drillscharen (12), die in mindestens zwei Reihen (10, 11) im Wesentlichen senkrecht auf die Vorschubrichtung (5) angeordnet sind, und
• Verbindungsarme (13), die im Wesentlichen identischen sind und jeweils einen Drillschar (12) tragen;
und
- eine zentralisierte Vorrichtung (23) zur Schardruckeinstellung, die auf die gesamte Ablageelemente (6) einwirkt und eine gleichzeitige Schardruckeinstellung auf den Reihen (10, 11) ermöglicht;
umfasst, ***dadurch gekennzeichnet,* dass** die zentralisierte Vorrichtung (23) zur Schardruckeinstellung von einer Drehwelle (24) gebildet ist, die sich über die gesamte Breite der Sämaschine (1) zwischen einem vorderen Träger (19) und einem hinteren Träger (20) erstreckt, wobei die Träger (19, 20) Stützen (14) tragen, mit denen die Verbindungsarme (13) mit Hilfe eines jeweiligen Gelenks (15) verbunden sind.

2. Sämaschine nach Anspruch 1, ***dadurch gekennzeichnet,* dass** die Drehwelle (24) in halbem Abstand zwischen dem Gelenk (15) der Ablageelemente (6) des vorderen Trägers (19) und dem Gelenk (15) der Ablageelemente (6) des hinteren Trägers (20) angeordnet ist.

3. Sämaschine nach Anspruch 1 oder 2, ***dadurch gekennzeichnet,* dass** die Schardruckeinstellung gleichzeitig zwischen den Ablageelementen (6) der vorderen Reihe (10) und den Ablageelementen (6) der hinteren Reihe (11) erfolgt.

4. Sämaschine nach Anspruch 3, ***dadurch gekennzeichnet,* dass** die zentralisierte Vorrichtung (23) zur Schardruckeinstellung mindestens einen Hebel zur Schardruckeinstellung (30) umfasst, der es ermöglicht, den Schardruck aller Drillscharen (12) gleichzeitig auf einen selben Wert zu verändern.

5. Sämaschine nach Anspruch 1 oder 2, ***dadurch gekennzeichnet,* dass** jeder Verbindungsarm (13) mit einem Blech (25) der Drehwelle (24) mit Hilfe eines elastischen Elements (22) verbunden ist.

6. Sämaschine nach Anspruch 5, ***dadurch gekennzeichnet,* dass** die Drehwelle (24) zwei einander diametral gegenüber liegende Bleche (25) umfasst.

7. Sämaschine nach Anspruch 5 oder 6, ***dadurch gekennzeichnet,* dass** jedes Blech (25) mehrere Löcher (26) fiir die Befestigung der elastischen Elemente (22) umfasst.

8. Sämaschine nach irgend einem der Ansprüche 1 bis 7, ***dadurch gekennzeichnet,* dass** mindestens einer der Verbindungsarme (13) einen länglichen Teil (28) umfasst.

9. Sämaschine nach Anspruch 5 oder 7, ***dadurch gekennzeichnet,* dass** das elastische Element (22) von einer Feder gebildet ist.

10. Sämaschine nach irgend einem der Ansprüche 1 bis 9, ***dadurch gekennzeichnet,* dass** die Ablageelemente (6) der vorderen Reihe (10) und die Ablageelemente (6) der hinteren Reihe (11) mit dem Rahmen (2) durch eine Gleitschienenvorrichtung (9) verbunden sind, die ein rasches Abmontieren einer Säschiene (8) ermöglicht, wobei die Säschiene (8) die Ablageelemente (6) trägt.

11. Sämaschine nach Anspruch 10, ***dadurch gekennzeichnet,* dass** die Gleitschienenvorrichtung (9) ein Langloch (18) umfasst.

12. Sämaschine nach Anspruch 11, ***dadurch gekennzeichnet,* dass** das Langloch (18) nach unten hin in Richtung des Bodens (S) offen ist.

13. Sämaschine nach irgend einem der Ansprüche 1 bis 12, ***dadurch gekennzeichnet,* dass** die Sämaschine (1) vom Typ Drillmaschine ist.

## Claims

1. Agricultural seed drill (1) comprising:
- a frame (2);
- a seed storage device (3);
- elements (6) for planting the seed in the soil (S) consisting:
* of sowing coulters (12) disposed in at least two rows (10, 11) substantially perpendicular to the direction of travel (5) and;
* of substantially identical link arms (13) each supporting a sowing coulter (12);
and
- a centralized depth control device (23) acting on all the planting elements (6) and making it possible to adjust the depth control simultaneously on the said rows (10, 11);
***characterized in* that** the said centralized depth control device (23) consists of a pivot shaft (24) which extends across the whole width of the seed drill (1), between a front beam (19) and a rear beam (20), the said beams (19, 20) supporting supports (14) to which the said link arms (13) are connected by means of a respective articulation (15).

2. Seed drill according to Claim 1, ***characterized in* that** the said pivot shaft (24) is placed mid-way between the articulation (15) of the planting elements (6) of the front beam (19) and the articulation (15) of the planting elements (6) of the rear beam (20).

3. Seed drill according to Claim 1 or 2, ***characterized in* that** the depth control adjustment is simultaneous between the said planting elements (6) of the front row (10) and the said planting elements (6) of the rear row (11).

4. Seed drill according to Claim 3, ***characterized in* that** the said centralized depth control device (23) comprises at least one depth control adjustment lever (30) making it possible to modify the depth control pressure of all the sowing coulters (12) simultaneously to one and the same value.

5. Seed drill according to Claim 1 or 2, ***characterized in* that** each link arm (13) is connected to a metal sheet (25) of the said pivot shaft (24) by means of an elastic element (22).

6. Seed drill according to Claim 5, ***characterized in* that** the said pivot shaft (24) comprises two diametrically opposed metal sheets (25).

7. Seed drill according to Claim 5 or 6, ***characterized in* that** each metal sheet (25) comprises several holes (26) for the attachment of the said elastic elements (22).

8. Seed drill according to any one of Claims 1 to 7, ***characterized in* that** at least one of the said link arms (13) comprises an elongated portion (28).

9. Seed drill according to Claim 5 or 7, ***characterized in* that** the said elastic element (22) consists of a spring.

10. Seed drill according to any one of Claims 1 to 9, ***characterized in* that** the said planting elements (6) of the front row (10) and the said planting elements (6) of the rear row (11) are connected to the said frame (2) by means of a slide device (9) allowing a rapid removal of one sowing bar (8), the said sowing bar (8) supporting the said planting elements (6).

11. Seed drill according to Claim 10, ***characterized in* that** the said slide device (9) comprises an oblong hole (18).

12. Seed drill according to Claim 11, ***characterized in* that** the said oblong hole (18) is open downwards in the direction of the soil (S).

13. Seed drill according to any one of Claims 1 to 12, ***characterized in* that** the said agricultural seed drill (1) is of the in-line type.
